# EUROPEAN PATENT APPLICATION

(11) **EP 4 625 387 A1**
(43) Date of publication of application: **01.10.2025**
(21) Application number: 25164716.0
(22) Date of filing: 19.03.2025
(51) Int. Cl.: G08G 1/0968, G08G 1/16, B60R 1/27, G08G 1/0969

(54) **DRIVING ASSISTANCE DEVICE**

(30) Priority: 29.03.2024 JP 2024055963
(71) Applicant: Aisin Corporation, Kariya, Aichi 448-8650 (JP)
(72) Inventor: WATANABE, Kazuya, Kariya, Aichi, 448-8650 (JP)
(74) Representative: TBK

(57) **Abstract**

A driving assistance device (1) includes: an image storage unit (31) configured to cumulatively store captured images, each obtained by capturing an image of a surrounding environment by an imaging device (6, 7, 8A, 8B) provided in a vehicle (2), in association with vehicle information when capturing the respective captured images; an image synthesizing unit (31) configured to synthesize the cumulatively stored captured images based on the vehicle information to generate a route surrounding image (48) indicating a surrounding environment along a route on which the vehicle travels; and an image display unit (4) configured to display the route surrounding image.

## Description

### TECHNICAL FIELD

This disclosure relates to a driving assistance device that assists driving of a vehicle.

### BACKGROUND DISCUSSION

In the related art, various methods are used as an information providing method for providing an occupant of a vehicle with various types of information for assisting traveling of the vehicle, such as route guidance and warning of obstacles. Examples thereof include a display by a liquid crystal display provided in the vehicle and a sound output from a speaker. Here, there are areas that are blind spots around the vehicle, that are difficult to see from a position of a driver and in order to allow the driver to understand a situation in such blind spots, especially when performing special operations such as a parking operation or a garage-leaving operation, images of the surroundings captured by cameras provided in the vehicle are displayed on the liquid crystal display.

For example, JP 2023-176548 discloses a technique in which when parking assistance for parking a vehicle in a parking space is performed, images of a surrounding environment are captured by a plurality of cameras provided in an outer wall of the vehicle, and the captured images are synthesized to generate a traveling direction image indicating a traveling direction of the vehicle or an overhead image of the vehicle surroundings viewed from above, and the image is displayed on a liquid crystal display.

However, there is a problem that the traveling direction image or the overhead image displayed in JP 2023-176548A (paragraphs 0071 to 0088) (Reference 1) can show only a situation of an area near the host vehicle. Similarly, there is a problem in that only the area near the vehicle can be displayed regarding a future course (a parking trajectory) of the host vehicle. Such a technique in Reference 1 can support parking assistance for a parking space near the host vehicle. However, for example, in long-range parking in which the host vehicle moves to a predetermined distant parking space within a large site and parks there, there is a problem in that sufficient support to the user cannot be provided because it is not possible to provide information about situations around a traveling route to the parking space.

A need thus exists for a driving assistance device that displays a route surrounding image generated by synthesizing captured images captured when a vehicle has traveled in the past, making it possible to indicate a situation around a travel route on which the vehicle will travel, not limited to the vicinity of the vehicle, for example, even in a case of long-range parking that requires a long distance to a parking space.

### SUMMARY

A driving assistance device according to this disclosure includes: an image storage unit configured to cumulatively store captured images, each obtained by capturing an image of a surrounding environment by an imaging device provided in a vehicle, in association with vehicle information when capturing the respective captured images; an image synthesizing unit configured to synthesize the cumulatively stored captured images based on the vehicle information to generate a route surrounding image indicating a surrounding environment along a route on which the vehicle travels; and an image display unit configured to display the route surrounding image.

The "captured image obtained by capturing an image of the surrounding environment" may be an image captured by an imaging device such as a camera or an image obtained by processing the captured image. For example, an image obtained by synthesizing images captured by a plurality of cameras or an image obtained by viewpoint conversion may be used.

According to the driving assistance device of this disclosure having the above configuration, a route surrounding image generated by synthesizing captured images captured when a vehicle has traveled in the past is generated, making it possible to indicate a situation around a travel route on which the vehicle will travel, not limited to the vicinity of the vehicle, for example, even in a case of long-range parking that requires a long distance to a parking space. Further, when a vehicle image is displayed in the route surrounding image, it is possible to easily grasp a current position of the host vehicle on the travel route.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram showing a configuration of a driving assistance device according to the present embodiment;
Fig. 3 is a flowchart of a route surrounding image generation processing program according to the present embodiment;
Fig. 4 is a diagram showing a method of generating an overhead image;
Fig. 5 is a diagram showing the generated overhead image;
Fig. 6 is a diagram showing a range of the overhead images to be cumulatively stored;
Fig. 7 is a diagram showing a route surrounding image generated by combining a part of each of the cumulatively stored overhead images;
Fig. 8 is a diagram showing an example of the route surrounding image;
Fig. 9 is a flowchart of a parking assistance processing program according to the present embodiment;
Fig. 10 is a diagram showing an example of the route surrounding image displayed on a liquid crystal display; and
Fig. 11 is a diagram showing an example of the route surrounding image displayed on the liquid crystal display.

### DETAILED DESCRIPTION

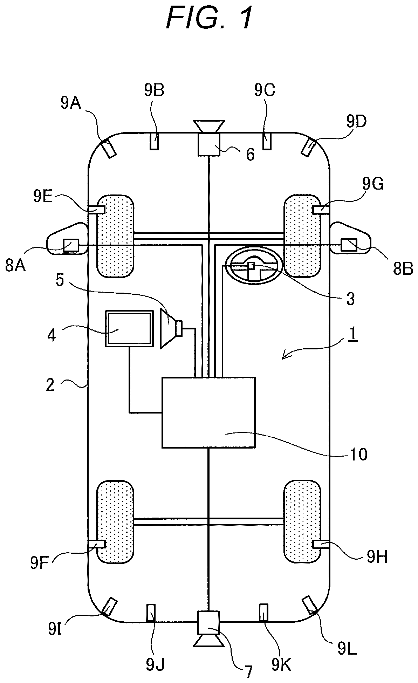

Hereinafter, a driving assistance device according to an embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects the autonomous driving assistance (for example, turning on an autonomous driving start button) and it is determined that the traveling by the autonomous driving assistance is possible. Meanwhile, the vehicle 2 may be a vehicle that can only perform assisted traveling by autonomous driving assistance. Alternatively, the vehicle 2 may perform the assisted traveling by the autonomous driving assistance only for traveling (that is, parking assistance) to a parking space when the vehicle is parked.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, and a brake is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using detection results of a sensor or a camera, a parking trajectory to the parking space is calculated, the vehicle enters the parking space along the calculated parking trajectory, and the parking is completed. Further, in addition to the normal parking assistance, the parking assistance also supports long-range parking which involves parking in a distant parking space such as a garage at home or a monthly contracted parking space in a parking lot. In the parking assistance for long-range parking, vehicle control is automatically performed to move the vehicle to a distant, previously set parking space and complete parking. However, in the parking assistance, only a steering operation may be automatically performed, and the drive source and the brake may be controlled based on a manual operation. Alternatively, only guidance on the parking trajectory into the parking space or guidance on a vehicle operation may be performed, and a parking operation into the parking space may be manually performed by the user. In the above autonomous driving assistance, a route surrounding image is displayed on an in-vehicle display. The route surrounding image is an image of an actual scene along a route on which the vehicle currently travels, which is generated from a scene (actual scene) around the vehicle captured in the past by a camera provided in the vehicle.

As shown in Fig. 1, the vehicle 2 includes an operation unit 3 that receives an operation from an occupant, a liquid crystal display 4 that displays the route surrounding image to be described later and other information related to the driving assistance to the occupant, a speaker 5 that outputs audio guidance related to the driving assistance, a front camera 6, a rear camera 7, and side cameras 8A and 8B for capturing images of surroundings of the vehicle, ultrasonic sensors 9A to 9L that detect obstacles in the surroundings of the vehicle, and a driving assistance electronic control unit (ECU) 10 that performs various types of arithmetic processing based on received information. The above driving assistance device 1 includes the driving assistance ECU 10 and other components.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is provided on an instrument panel of the vehicle 2 and displays the route surrounding image which is an image of an actual scene along a route on which the vehicle is currently traveling. Here, the route surrounding image is generated by performing synthesis processing on a part of captured images captured in the past by cameras including the front camera 6, the rear camera 7, and the side cameras 8A and 8B, and is an actual scene image (a so-called street view) indicating a surrounding environment along a route on which the vehicle travels. Therefore, when the vehicle travels on the same route as the route on which the vehicle has traveled in the past, it is possible to display the route surrounding image along the route which includes a route portion on which the vehicle is going to travel in addition to a route portion on which the vehicle has already traveled. When there is a warning object such as a pedestrian around the vehicle 2, a warning image indicating the presence of the warning object may also be displayed at a position of the warning object in the route surrounding image. When the parking assistance is performed, the parking space or the parking trajectory to the parking space serving as a parking candidate may be displayed in the route surrounding image displayed on the liquid crystal display 4. The liquid crystal display 4 may also be used in a navigation device.

The speaker 5 is provided on the instrument panel of the vehicle 2 and outputs a guidance voice or a warning sound related to the driving assistance. The speaker 5 may also be used in a navigation device.

The front camera 6 is, for example, an imaging device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an imaging device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also imaging devices each including a camera using a solid-state imaging element such as a CCD and are attached to, for example, left and right side mirrors of the vehicle 2 with optical axis directions thereof being directed to lateral sides of the vehicle.

The driving assistance ECU 10 cumulatively stores, among the captured images captured by the cameras including the above front camera 6, rear camera 7, and side cameras 8A and 8B, in particular, a part of the captured images captured by the cameras during traveling together with vehicle information (vehicle speed, host vehicle position coordinates, and the like) at the time of capturing, and synthesizes the cumulatively stored images to generate the route surrounding image indicating the surrounding environment along the route on which the vehicle has traveled. During the execution of the autonomous driving assistance, by performing image recognition processing on the captured image, a partition line, a parking frame line, and an obstacle (another vehicle, a pedestrian, a bicycle, a wall, a guard rail, and other structures) around the vehicle are detected, and the autonomous driving assistance is executed based on a detection result thereof. In particular, when parking assistance is performed, the above detection result of the obstacle by the camera is used to specify the parking space and confirm the surrounding situation.

The ultrasonic sensors 9A to 9L are disposed at predetermined intervals on the front, rear, and sides of the vehicle, respectively, transmit ultrasonic waves as probing waves to the surroundings of the vehicle 2, and receive reflected waves which are the transmitted probing waves reflected by objects around the vehicle, thereby detecting the objects that reflect the probing waves. Specifically, the ultrasonic sensors 9A to 9L are a type of distance measurement sensor that can detect a distance (distance measurement value) to the object that reflects the probing wave by measuring a time from the transmission to the reception. The ultrasonic sensors 9A to 9L can generate an output signal (including the distance to the detected object) corresponding to a reception result of the reception wave and output the output signal to a control unit. Examples of an object serving as a target to be detected by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set as appropriate. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probing wave is forward in the traveling direction of the vehicle. The ultrasonic sensors 9E and 9F are provided on a left side surface of the vehicle 2 being directed to a left direction such that the transmission direction of the probing wave is leftward in the traveling direction of the vehicle. The ultrasonic sensors 9G and 9H are provided on a right side surface of the vehicle 2 being directed to a right direction such that the transmission direction of the probing wave is rightward in the traveling direction of the vehicle. The ultrasonic sensors 9I to 9L are provided on a rear surface of the vehicle 2 being directed to a direction opposite to the traveling direction such that the transmission direction of the probing wave is toward the rear of the vehicle. The ultrasonic sensors 9A to 9L have substantially the same height from the ground surface.

In the present embodiment, among the ultrasonic sensors 9A to 9L, in particular, the ultrasonic sensors 9A to 9D on a front surface of the vehicle 2 and the ultrasonic sensors 9I to 9L on a rear surface of the vehicle 2 are provided at positions at which reflected waves can be received as indirect waves between adjacent sensors. Therefore, it is possible to specify not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can be specified by triangulation using a measured distance of a previous position, a measured distance of a current position, and a movement distance therebetween as the vehicle moves.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of steering, a drive source, and a brake is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. In contrast, when performing parking assistance for long-range parking, vehicle control is performed in which a parking trajectory including movement to a distant parking space registered in advance such as a garage at home or a monthly contracted parking space in a parking lot is calculated, the vehicle enters the parking space along the calculated parking trajectory, and parking is completed. A part of the captured image captured by each camera during traveling is cumulatively stored together with the vehicle information (host vehicle position coordinates, orientation, and traveling direction) at the time of imaging, the cumulatively stored images are synthesized to generate the route surrounding image indicating the surrounding environment along the route on which the vehicle has traveled, and the generated route surrounding image is displayed in the autonomous driving assistance. The driving assistance ECU 10 is connected to the operation unit 3, the liquid crystal display 4, the speaker 5, the front camera 6, the rear camera 7, the side cameras 8A and 8B, and the ultrasonic sensors 9A to 9L via an in-vehicle network such as a CAN. The driving assistance ECU 10 is also connected to various sensors such as a vehicle speed sensor, a wheel speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components shown in Fig. 1, the vehicle 2 includes basic components as the vehicle 2. However, only a configuration related to control of the autonomous driving assistance and control related to the configuration will be described.

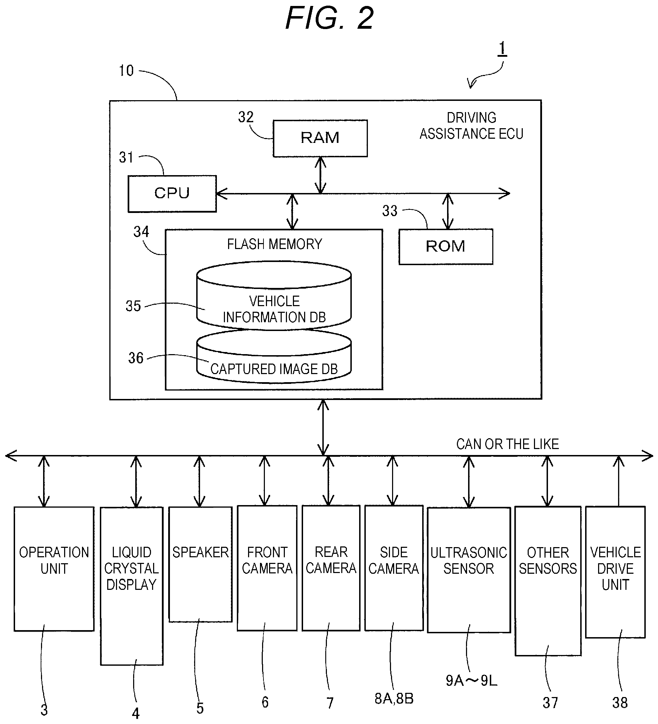

Next, the driving assistance ECU 10 of the driving assistance device 1 included in the vehicle 2 will especially be described in detail. Fig. 2 is a block diagram showing a configuration of the driving assistance device 1 according to the present embodiment.

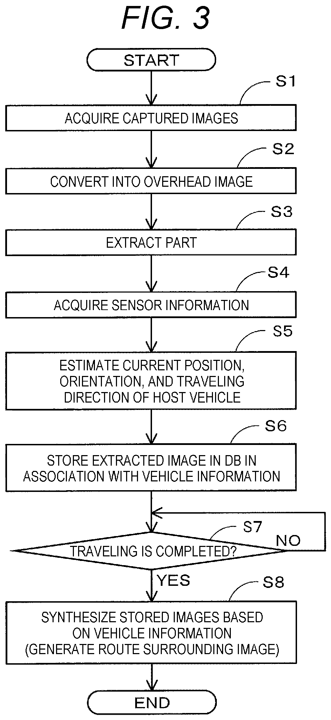

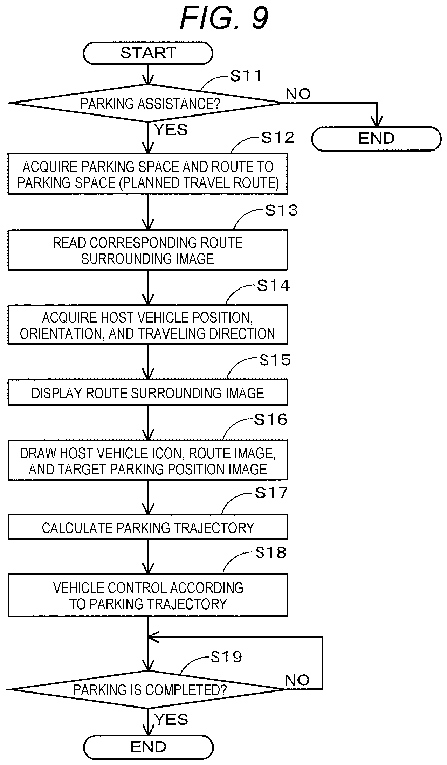

As shown in Fig. 2, the driving assistance electronic control unit (ECU) 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data when the travel trajectory is calculated, a ROM 33 that stores a control program, and a route surrounding image generation processing program (see Fig. 3) and a parking assistance processing program (see Fig. 9), which will be described later, and a flash memory 34 that stores a program read from the ROM 33. The driving assistance ECU 10 includes various units as a processing algorithm. For example, an image storage unit cumulatively stores captured images, each obtained by capturing an image of the surrounding environment by the front camera 6, the rear camera 7, and the side cameras 8A and 8B provided in the vehicle, in association with the vehicle information when capturing the respective captured images. An image synthesizing unit synthesizes the cumulatively stored captured images based on the vehicle information to generate the route surrounding image indicating the surrounding environment along a route on which the vehicle has traveled. The image display unit displays the route surrounding image.

The driving assistance ECU 10 is also connected to various sensors 37 for detecting behaviors of the vehicle, such as a vehicle speed sensor, a wheel speed sensor, an acceleration sensor, a gyro sensor, a steering sensor, and a shift position sensor, and a drive unit 38 of the vehicle, such as a steering wheel, a brake, an accelerator, and a transmission. A current behavior of the vehicle is detected based on detection results of these sensors 37, and the autonomous driving assistance for the vehicle 2 is performed by controlling the drive unit 38. As specific contents of autonomous driving assistance, for example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. However, only a steering operation may be automatically performed, and the drive source and the brake may be controlled based on a manual operation.

The flash memory 34 includes a vehicle information DB 35 and a captured image DB 36. The vehicle information DB 35 stores various types of information related to the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such pieces of information are input in advance by the occupant or a person on a vehicle manufacturer side.

The captured image DB 36 is a storage unit for accumulating and storing a part of the captured image captured by the camera during traveling together with the vehicle information when capturing the image. The vehicle information includes position coordinates, orientation, and traveling direction (forward and backward) of the vehicle at the time of capturing the captured image to be stored in the captured image DB 36. The vehicle information is estimated from, for example, a vehicle speed, a wheel speed, a wheel speed pulse integration value, a steering angle, and the like acquired by the various sensors 37.

Next, the route surrounding image generation processing program executed by the driving assistance ECU 10 in the driving assistance device 1 having the above-described configuration will be described with reference to Fig. 3. Fig. 3 is a flowchart of the route surrounding image generation processing program according to the present embodiment. Here, the route surrounding image generation processing program is a program that is executed after an accessory power supply (ACC) of the vehicle 2 is turned on, accumulates and stores a part of the captured images captured by the cameras included in the vehicle 2, and synthesizes the stored captured images to generate the route surrounding image indicating the surrounding environment along a route on which the vehicle has traveled. However, if a target for which the route surrounding image is generated is limited to the parking lot, the route surrounding image generation processing program may be executed when the host vehicle enters the parking lot. Alternatively, if a period during which the route surrounding image is generated is limited to a period during which the vehicle is traveling by the autonomous driving assistance, the route surrounding image generation processing program may be executed when the autonomous driving assistance is started. The programs shown in the flowcharts in Fig. 3 and Fig. 9 are stored in the RAM 32 and the ROM 33 of the driving assistance device 1 and are executed by the CPU 31.

The following processing in S1 to S6 is performed in units of one image captured by the front camera 6, the rear camera 7, and the side cameras 8A and 8B until the vehicle ends traveling. For example, since the front camera 6, the rear camera 7, and the side cameras 8A and 8B according to the present embodiment have a frame rate of 30 fps (capturing 30 images per second), the following processing is performed on the most recently captured image every 33 ms. However, an execution interval of the program does not necessarily have to be 33 ms. For example, if processing is performed on 10 images at once, the program may be executed every 330 ms.

First, in step (hereinafter abbreviated as S) 1, the CPU 31 acquires captured images captured most recently by the front camera 6, the rear camera 7, and the side cameras 8A and 8B. As described above, in the present embodiment, the front camera 6 is provided above the front bumper of the vehicle 2 or on a back side of a rear-view mirror with the optical axis direction thereof being directed to the front in the traveling direction of the vehicle. The rear camera 7 is attached in the vicinity of the upper center of the license plate attached to the rear of the vehicle 2 with the optical axis direction thereof being directed to the rear of the vehicle. The side cameras 8A and 8B are attached to the left and right side mirrors of the vehicle 2 and are provided with the optical axis direction thereof being directed to the lateral sides of the vehicle. A captured image of the surrounding environment in all orientations in front, rear, left, and right directions of the vehicle 2 is acquired.

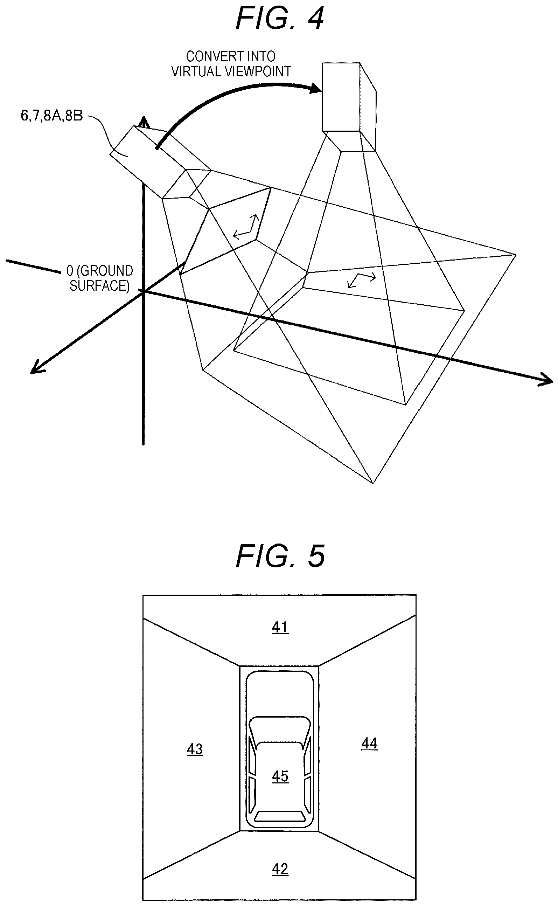

Subsequently, in S2, the CPU 31 generates an overhead image of a region around the vehicle looking down vertically from above based on the real-time captured images captured by the front camera 6, the rear camera 7, and the side cameras 8A and 8B acquired in S1. For example, a method for generating an overhead image is described below. As shown in Fig. 4, the real-time captured image captured by each camera is projected onto a virtual projection surface that is a horizontal plane corresponding to a height of the ground surface, and the captured image projected onto the virtual projection surface is converted into an image viewed from a virtual viewpoint looking down vertically from above the vehicle 2, thereby generating an overhead image of each camera. The conversion to the image viewed from the virtual viewpoint (viewpoint conversion) is performed by first converting each coordinate in a captured image coordinate system set along a plane perpendicular to the optical axis of the camera, into each coordinate in a ground surface coordinate system set along the ground surface, and then converting each coordinate into each coordinate in an overhead image coordinate system. Conversion formulas used for coordinate conversion are already known, and therefore the description thereof will be omitted. Then, as shown in Fig. 5, an overhead image 41 obtained by converting the viewpoint of the captured image captured by the front camera 6, an overhead image 42 obtained by converting the viewpoint of the captured image captured by the rear camera 7, an overhead image 43 obtained by converting the viewpoint of the captured image captured by the side camera 8A, and an overhead image 44 obtained by converting the viewpoint of the captured image captured by the side camera 8B are synthesized (connected), and an illustration image 45 schematically showing the host vehicle is inserted between the overhead images 41 to 44 to generate the overhead image. However, since an overhead image to be displayed is not generated in S2, there is no need to insert the illustration image 45.

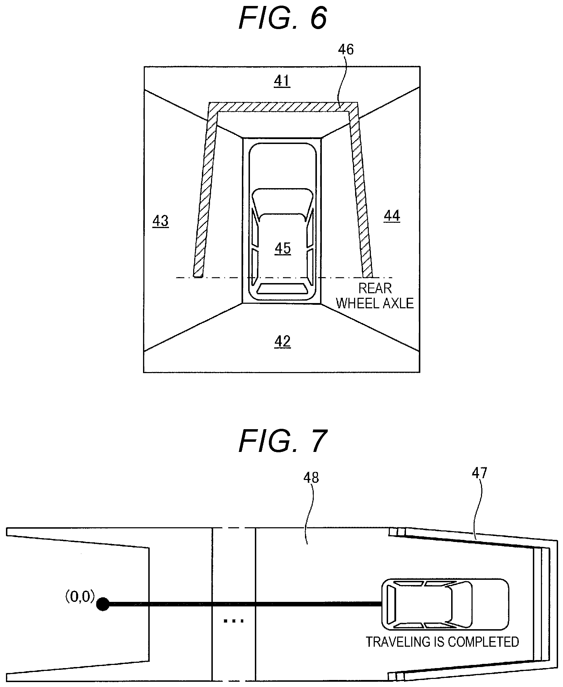

Next, in S3, the CPU 31 extracts (trims) a part of the overhead image generated in S2. Here, a range in which the overhead image is extracted is an extraction range 46 shown in Fig. 6. The extraction range 46 is a U-shaped region surrounding the vehicle on three sides including the traveling direction (forward if moving forward, backward if moving backward) and left and right sides of the host vehicle. Fig. 6 shows the extraction range 46 in which the extraction is performed particularly when the host vehicle is moving forward, and is a region having a rear end located at a rear wheel axle and surrounding the host vehicle as close as possible without including the shadow of the host vehicle. When moving backward, the extraction range 46 is a region having a U shape opposite to that when moving forward and is a region having a front end located at the rear wheel axle and surrounding the host vehicle as close as possible without including the shadow of the host vehicle. By setting the rear end of the extraction range 46 to the vicinity of the axle of the rear wheel, it is possible to fill the vicinity of the route on which the vehicle travels without a gap even when connecting the overhead images when the vehicle turns along the traveling direction as described later (S8). When the extraction range 46 is widened to the left and right, a displayable region in the route surrounding image to be described later is also widened, but since there is a higher possibility that the image in the overhead image is stretched or distorted as the distance from the host vehicle increases, it is desirable not to widen the extraction range 46 in the left-right direction as much as possible.

Meanwhile, a width a of the extraction range 46 is set to a width at which gaps between the images are not generated when the extracted overhead images are connected (S8) along the traveling direction to be described below. For example, assuming imaging in the parking lot, assuming a traveling speed of the vehicle is 20 km/h, a distance by which the vehicle travels during one frame (33 ms) is 0.183 m. Therefore, if a is set to about 0.2 m, no gap is generated between the images. If a is made longer, no gap is generated between the images even when the vehicle travels at a high speed. However, if a range away from the host vehicle is included, there is a high possibility that the image is stretched or distorted in the overhead image. Therefore, it is desirable to make a as short as possible without generating gaps between the images.

A value of a is merely an example and may be changed depending on the vehicle speed and the type of road on which the vehicle travels. For example, the value of a may be made small in a parking lot in which the vehicle is estimated to travel at a low speed, and the value of a may be made large in a general road on which the vehicle is estimated to travel at a high speed. In the present embodiment, the extraction range 46 has a bilaterally symmetrical shape, and may have a bilaterally asymmetrical shape. For example, in countries where traveling is on the left side of the road, it is estimated that vehicles are parked on the shoulder on the left side of the vehicle 2 traveling on the general road. Therefore, the left extraction range 46 may be set wider than the right extraction range 46 to include these parked vehicles in the extraction range.

In the present embodiment, the overhead image obtained by converting the captured image projected onto the ground surface into an image viewed from a virtual viewpoint looking down vertically from above the vehicle 2 is generated, and then an overhead image corresponding to the extraction range 46 shown in Fig. 6 is extracted. However, instead of the overhead image, a bird's-eye view image looking down diagonally may be generated, and then the extraction range 46 shown in Fig. 6 may be similarly extracted. The projection surface is not necessarily the ground surface.

Next, in S4, the CPU 31 acquires detection values indicating the behaviors of the vehicle such as the vehicle speed, the wheel speed, the wheel speed pulse integration value, and the steering angle from the various sensors 37 included in the vehicle connected via the CAN.

Subsequently, in S5, the CPU 31 estimates the position coordinates, the orientation, and the traveling direction (forward and backward) of the vehicle at the current time point based on the detection values acquired in S4. Each piece of information estimated in S5 is information obtained by estimating the position coordinates, the orientation, and the traveling direction (forward and backward) of the vehicle as the vehicle information when the overhead image extracted in S3 is captured. The position coordinates and the orientation estimated in S5 are relative values with respect to a reference position and a reference orientation. The reference position and the reference orientation are, for example, a position and an orientation of the vehicle 2 when the accumulation storage of the overhead images in the current travel is started (for example, when the ACC power supply is turned on, when the vehicle enters the parking lot, when the autonomous driving starts, or the like).

Thereafter, in S6, the CPU 31 cumulatively stores a part of the overhead images extracted in S3 in the captured image DB 36 in association with the vehicle information estimated in S5. Specifically, a part of the overhead image is stored in time series (or in a sequence according to the coordinates of the host vehicle when capturing the image).

Then, in S7, the CPU 31 determines whether the current traveling of the vehicle is completed. Specifically, it is determined that the traveling of the vehicle is completed when a shift position of the vehicle is changed to "P". Basically, it is the timing when parking in the parking space is completed.

Then, if it is determined that the traveling of the vehicle is completed (YES in S7), the processing proceeds to S8. On the other hand, if it is determined that the traveling of the vehicle is not completed (NO in S7), the processing returns to S1, and the generation of the overhead image and the storage thereof in the DB are continuously performed.

In S8, the CPU 31 synthesizes the plurality of overhead images stored in the captured image DB 36 in S6 based on the associated vehicle information to generate the route surrounding image along the route on which the vehicle has traveled.

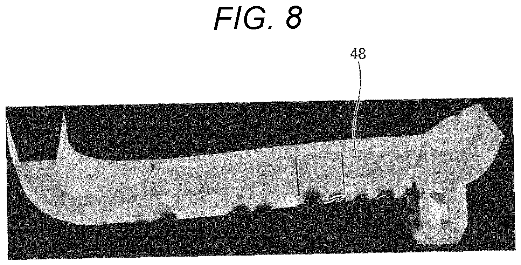

Specifically, as shown in Fig. 7, a part (hereinafter, referred to as an extracted overhead image 47) of the overhead image extracted in S3 is connected according to the position coordinates, the orientation, and the traveling direction of the host vehicle at the time of imaging, thereby generating a route surrounding image 48. When an overlapping range is generated in the extracted overhead image 47 due to the connection, the overlapping region is overwritten with new images with priority. Fig. 8 is an image diagram of the route surrounding image 48 generated by connecting the extracted overhead image 47. The generated route surrounding image 48 also includes information about a route on which the vehicle has traveled when the route surrounding image 48 is generated, that is, information for specifying what type of route the vehicle traveled on when the route surrounding image 48 is generated. The route surrounding image 48 generated in S8 is stored in the flash memory 34 together with the information about the route.

The route surrounding image 48 stored in the flash memory 34 is displayed when parking assistance for long-range parking is performed as described later, and can also be used as a thumbnail image. For example, when there are a plurality of parking spaces available for parking and the user selects which parking space to park in, the entire or a part of the route surrounding image 48 along the travel route to the parking space can be displayed as a thumbnail image for each parking space. Then, the user can select a parking space for parking the vehicle with reference to the displayed thumbnail image.

In the present embodiment, the extracted overhead image 47 acquired in the current travel is read from the captured image DB 36 when the traveling is ended, and the route surrounding image 48 along the route on which the vehicle has traveled in the current travel is collectively generated. A timing of generating the route surrounding image 48 may be during traveling. For example, each time a new extracted overhead image 47 is acquired, the new extracted overhead image 47 may be connected to the existing route surroundings image 48 at the time of acquisition to generate the route surroundings image 48. That is, the route surrounding image 48 along the route on which the vehicle is currently traveling may be generated in real-time for the rear of the current position of the vehicle.

In a mode in which the route surrounding image 48 along the route on which the vehicle is currently traveling is generated in real-time for the rear of the current position of the vehicle, although a target for which the route surrounding image 48 is generated is limited to the rear of the current position of the host vehicle, it is possible to display the route surrounding image 48 along the route on which the vehicle is currently traveling even when the vehicle is traveling along a new route. In addition, it is possible to display the route surrounding image 48 that reflects the surrounding situations (for example, positions of other vehicles) in real-time. However, as to be described later, in the long-range parking assistance, it is important to display the route surrounding image 48 to the parking space ahead in the traveling direction, and thus, in the present embodiment, the route surrounding image 48 is collectively generated at the end of traveling.

When the vehicle travels again on the same route as a route for which the route surrounding image 48 is already generated, it is basically not necessary to generate the route surrounding image 48. For example, when it is desired to display the route surrounding image 48 that reflects more current surrounding situations when parking assistance is performed, the route surroundings image 48 may be regenerated and updated.

Here, as a problem in the related art, when a captured image captured by a camera is displayed as an overhead image or a bird's-eye view image by changing the viewpoint, the three-dimensional object in the captured image may be displayed distorted or stretched relative to the original shape thereof, whereas in the present embodiment, as shown in Fig. 6, only an image in a very narrow range near the host vehicle is extracted and is connected to the overhead image extracted in the same manner, thereby generating the route surrounding image 48 shown in Fig. 8. Therefore, even when there is a three-dimensional object in the generated route surrounding image 48, it is possible to prevent distortion or stretching relative to the original shape.

Next, a parking assistance processing program executed by the driving assistance ECU 10 in the driving assistance device 1 having the above-described configuration will be described with reference to Fig. 9. Fig. 9 is a flowchart of the parking assistance processing program according to the present embodiment. Here, the parking assistance processing program is a program that is executed after the accessory power supply (ACC) of the vehicle 2 is turned on and performs parking assistance particularly when the vehicle is parked as one of autonomous driving assistance. In the following description, parking assistance for long-range parking of the vehicle will be described.

Here, the long-range parking refers to parking that targets a predetermined distant parking space, such as a garage at home or a monthly contracted parking space in a parking lot, and refers to parking that requires movement by a relatively long distance to the target parking space. In the following description, it is assumed that the vehicle has traveled in the past on the travel route to the parking space for performing the long-range parking by the route surrounding image generation processing program (Fig. 3), and the route surrounding image 48 along the travel route to the parking space has already been generated.

First, in S11, the CPU 31 determines whether to start parking assistance for long-range parking. In particular, the contents of the parking assistance according to the present embodiment include automatically moving the vehicle to the parking space for parking the vehicle, and displaying the route surrounding image 48 generated by the route surrounding image generation processing program (Fig. 3).

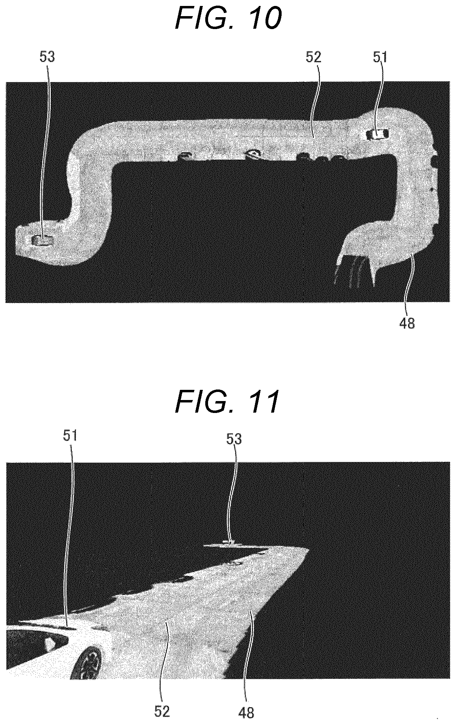

For example, the parking assistance may be started when the user operates the operation unit 3 to select to start the parking assistance, may be started when the vehicle approaches home, or may be automatically started when it is detected that the vehicle has entered a parking lot registered in advance or when the vehicle approaches the parking space registered in advance. When there are a plurality of parking spaces as parking candidates and the route surrounding image 48 along the travel route to each parking space is stored in the flash memory 34, all or a part of the route surrounding images 48 along the travel route to the parking space for each parking space may be displayed in a list as the thumbnail image. In this case, the user can select a parking space for parking the vehicle with reference to the displayed thumbnail image. When the route surrounding image 48 is displayed as a thumbnail image, a route image 52 and a target parking position image 53 to be described later are displayed together, and a host vehicle icon image 51 is excluded from display targets (see Figs. 10 and 11). When the route surrounding image 48 is displayed as a thumbnail image, it is desirable to display the route surrounding image 48 of the entire route on one screen as shown in Fig. 10 to allow the user to grasp at a glance what the route to the target parking space is.

If it is determined that the parking assistance for long-range parking is started (YES in S11), the processing proceeds to S12. On the other hand, if it is determined that the parking assistance for long-range parking is not started (NO in S11), the parking assistance processing program is ended.

In S12, the CPU 31 acquires a parking space (parking position) as a parking target in the current long-range parking. In the present embodiment, the parking space as a parking target is a parking space registered in advance by the user. A traveling route (a planned travel route) from the current position of the vehicle to the parking space is also acquired. As described above, in the present embodiment, it is assumed that the route surrounding image 48 along the travel route to the parking space has already been generated, and the route surrounding image 48 also includes the information about the route on which the vehicle has traveled when the route surrounding image 48 is generated as described above, that is, the information for specifying what type of route the vehicle traveled on when the route surrounding image 48 is generated. Therefore, by reading the information about the route stored together with the route surrounding image 48, the travel route from the current position of the vehicle to the parking space is acquired. That is, the current planned travel route is acquired on an assumption that the vehicle travels on the same travel route as when the vehicle was parked in the past. However, it is also possible to calculate a travel route to the parking space each time parking is performed.

In S13, the CPU 31 reads, from among the route surrounding images 48 generated by the route surrounding image generation processing program (Fig. 3), the route surrounding image 48 corresponding to the travel route to the parking space acquired in S12, that is, the route surrounding image 48 along the planned travel route on which the host vehicle is about to travel.

In S14, the CPU 31 acquires the detection values indicating the behaviors of the vehicle such as the vehicle speed, the wheel speed, the wheel speed pulse integration value, and the steering angle from the various sensors 37 included in the vehicle connected via the CAN, and specifies the position coordinates, the orientation, and the traveling direction (forward and backward) of the vehicle at the current time.

Thereafter, in S15, the CPU 31 displays the route surrounding image 48 read in S13 on the liquid crystal display 4 in a mode of matching the current position, the orientation, and the traveling direction of the vehicle. That is, the route surrounding image 48 visually recognized from the virtual viewpoint set corresponding to the coordinates, orientation, and the traveling direction at the current position of the vehicle is displayed on the liquid crystal display 4. A setting of the virtual viewpoint (from which viewpoint and in which direction the route surrounding image 48 is drawn) when drawing the route surrounding image 48 can be set as appropriate.

For example, Fig. 10 shows an example of an overhead image looking down on the entire route vertically downward from above the current position of the vehicle. Specifically, an overhead image of the route surrounding image 48 targeting the entire planned travel route from the current position of the vehicle to the parking space is displayed on one screen. In the example shown in Fig. 10, the entire route to the parking space and the surrounding environment can be objectively displayed. However, the overhead image may be displayed for only a part of the route centered on the current position of the host vehicle instead of the entire route. In contrast, Fig. 11 shows an example in which the virtual viewpoint is set in an upper airspace behind the current position of the vehicle and the bird's-eye view image is obtained by looking diagonally downward from the upper airspace in a direction of the parking space. In the example shown in Fig. 11, the route to the parking space and the surrounding environment can be subjectively displayed from the viewpoint of a host vehicle side. The overhead image shown in Fig. 10 and the bird's-eye view image shown in Fig. 11 may be switched and displayed based on a user operation.

Then, in S16, the CPU 31 superimposes the host vehicle icon image 51 indicating the position and the orientation of the host vehicle in correspondence with the current position and the orientation of the host vehicle on the route surrounding image 48 drawn in S15 and displays the route surrounding image 48 on the liquid crystal display 4. The host vehicle icon image 51 is an image that imitates an appearance of the host vehicle. As shown in Figs. 10 and 11, by drawing the host vehicle icon image 51, the user can grasp the environment around the vehicle in association with the current position and the orientation of the host vehicle. In the overhead image showing the entire route as shown in Fig. 10, by displaying the host vehicle icon image 51, it is also possible to show where the host vehicle is currently located on the entire route in the travel route to the parking space. The liquid crystal display 4 may display information indicating a progress situation of movement to the parking space separately from the route surrounding image 48. For example, when a route length from a start position of the parking assistance to the parking space is set to 100, a meter showing a ratio of the route length from the start position of the parking assistance to the current position of the host vehicle may be displayed on the liquid crystal display 4. By confirming the meter, the user can easily grasp how long it takes to complete the parking.

In S16, the CPU 31 also draws the route image 52 indicating the travel route of the host vehicle when the host vehicle traveled in the past (corresponding to the current planned travel route) in the route surrounding image 48. A specific position and shape of a trajectory of the traveling route on which the host vehicle has traveled in the past in the route surrounding image 48 can be specified based on the vehicle information stored in the captured image DB 36. The vehicle information includes position coordinates, orientation, and traveling direction (forward and backward) of the vehicle at the time of capturing the captured image stored in the captured image DB 36.

In S16, the CPU 31 also draws the target parking position image 53 indicating the position of the target parking space in the route surrounding image 48. The target parking position image 53 is, for example, an image imitating an external shape of the vehicle in Figs. 10 and 11, and may be a flag image or a frame image.

By visually recognizing the route image 52 and the target parking position image 53 drawn to be superimposed on the route surrounding image 48, the user can easily grasp on what route the vehicle travels to move to the parking position.

In the route surrounding image 48 shown in Fig. 11, since a range of the route surrounding image 48 to be displayed changes as the current position of the vehicle changes, a drawing range is sequentially switched and displayed as the vehicle moves. In contrast, in the overhead image shown in Fig. 10, the route surrounding image 48 is fixed. When the current position and the orientation of the vehicle change, a display position and an orientation of the host vehicle icon image 51, which is displayed on the liquid crystal display 4 in S16, in the route surrounding image 48 change accordingly.

Here, as a problem in the related art, when a captured image captured by a camera is displayed as an overhead image or a bird's-eye view image by changing the viewpoint, the three-dimensional object in the captured image may be displayed distorted or stretched relative to the original shape thereof, whereas in the present embodiment, as described above, only an image in a very narrow range near the host vehicle is extracted. Therefore, when the virtual viewpoint is converted to any position and the image is displayed, even when there is a three-dimensional object, such as the parked vehicle, in the route surrounding image 48, it is possible to prevent the image from being displayed distorted or stretched relative to the original shape.

Subsequently, in S17, the CPU 31 calculates a parking trajectory that is a travel trajectory for parking the host vehicle in the parking space acquired in S12. Here, the parking trajectory when the long-range parking is performed includes a trajectory for traveling in an aisle in a parking lot or in a site to move to the vicinity of the parking space, and a trajectory for actually entering the parking space from the vicinity of the parking space with turning or reversing. As described above, in the present embodiment, it is assumed that the route surrounding image 48 along the travel route to the parking space has already been generated, and the route surrounding image 48 also includes the information about the route on which the vehicle has traveled when the route surrounding image 48 is generated as described above, that is, the information for specifying what type of route the vehicle traveled on when the route surrounding image 48 is generated. Therefore, the parking trajectory may be acquired based on the information about the route stored together with the route surrounding image 48. That is, the same parking trajectory as when the vehicle is parked in the past may be acquired as the current parking trajectory.

Thereafter, in S18, the CPU 31 starts parking assistance according to the parking trajectory calculated in S17. Specifically, the current position of the host vehicle is detected at any time, and vehicle control of the steering, the drive source, and the brake is automatically performed such that the vehicle travels at a designated speed along the generated parking trajectory. A shift position is also automatically switched.

However, in the movement of the vehicle along the parking trajectory, only a steering operation may be automatically performed, and the drive source and the brake may be controlled based on a manual operation. Alternatively, the movement of the vehicle may be performed not by autonomous driving but by manual driving. In this case, as the parking assistance, the parking space and the parking trajectory are displayed on the liquid crystal display 4, and a timing of turning the steering wheel is guided by voice.

Subsequently, in S19, the CPU 31 determines whether the parking of the vehicle is completed. Specifically, it is determined that the parking of the vehicle is completed when the vehicle is located at the target parking position set in the parking space acquired in S12 and the shift position of the vehicle is changed to "P".

If it is determined that the parking of the vehicle is completed (YES in S19), the parking assistance processing program is ended. On the other hand, if it is determined that the parking of the vehicle is not completed (NO in S19), the parking assistance is continuously performed.

As described above in detail, according to the driving assistance device 1 and computer programs executed by the driving assistance device 1 of the present embodiment, because the captured images obtained by capturing images of the surrounding environment by the front camera 6, the rear camera 7, and the side cameras 8A and 8B provided in the vehicle are cumulatively stored in association with the vehicle information when capturing the respective images (S6), the cumulatively stored captured images are synthesized based on the vehicle information to generate the route surrounding image 48 indicating a surrounding environment along the route on which the vehicle travels (S8), and the route surrounding image 48 is displayed (S15, S16), for example, even when long-range parking that requires a long distance to the parking space, it is possible to indicate the situation around the travel route on which the vehicle travels without being limited to the vicinity of the vehicle. Further, when a vehicle image is displayed in the route surrounding image, it is possible to easily grasp a current position of the host vehicle on the travel route.

In addition, since the captured images captured by the front camera 6, the rear camera 7, and the side cameras 8A and 8B are converted into overhead images viewed vertically downward from a virtual viewpoint located in an upper airspace (S2), and an image in a U-shaped region surrounding the vehicle from three sides including a traveling direction and left and right sides of the vehicle in the overhead image is extracted and stored (S6), even when the overhead image or the bird's-eye view image viewed from any virtual viewpoint is displayed, the three-dimensional object can be displayed without being distorted or stretched relative to the original shape thereof.

In addition, since the route surrounding image 48 to be displayed is sequentially switched as the vehicle moves and is displayed together with the host vehicle icon image 51 indicating the current position of the vehicle, it is possible to subjectively display the travel route and the surrounding environment from the viewpoint on the host vehicle side.

In addition, since the planned travel route is a route to the parking position of the vehicle and the route surrounding image 48 is displayed on one screen, it is possible to objectively display the entire route and the surrounding environment.

It is to be understood that this disclosure is not limited to the above-described embodiment, and various improvements and modifications can be made without departing from the scope of this disclosure.

For example, in the present embodiment, the captured images captured by the front camera 6, the rear camera 7, and the side cameras 8A and 8B are converted into the overhead images, and a part of the overhead image is cumulatively stored and is synthesized to generate the route surrounding image 48. However, the route surrounding image 48 may be generated by storing a part of the bird's-eye view image instead of the overhead image. Although a part of the overhead image is stored as a U shape as shown in Fig. 6, a shape other than the U shape may be used as long as the part of the overhead image is not far from the vehicle.

In the present embodiment, it is assumed that the route surrounding image 48 shown in Fig. 10 or 11 is displayed on the liquid crystal display 4 while the parking assistance by the autonomous driving assistance is performed. The route surrounding image 48 may also be displayed while the autonomous driving assistance other than the parking assistance is performed. Further, the route surrounding image 48 shown in Fig. 10 or 11 may be displayed on the liquid crystal display 4 while the vehicle is traveling by manual driving.

In the present embodiment, the route surrounding image 48 shown in Fig. 10 or 11 is displayed on an in-vehicle display, and may be displayed on a display of a terminal outside the vehicle. This allows a user outside the vehicle to easily grasp the current progress of parking until completion, for example, when performing the parking assistance by remote control using a remote control.

In the present embodiment, the processing of the route surrounding image generation processing program (Fig. 3) and the parking assistance processing program (Fig. 9) are executed by the driving assistance ECU 10 of the driving assistance device 1, and an execution entity can be changed as appropriate. For example, a control unit of the liquid crystal display 4, a vehicle control ECU, a control unit of a navigation device, and other in-vehicle devices may execute the processing.

## Claims

1. A driving assistance device (1) comprising:
an image storage unit (31) configured to cumulatively store captured images, each obtained by capturing an image of a surrounding environment by an imaging device (6, 7, 8A, 8B) provided in a vehicle (2), in association with vehicle information when capturing the respective captured images;
an image synthesizing unit (31) configured to synthesize the cumulatively stored captured images based on the vehicle information to generate a route surrounding image (48) indicating a surrounding environment along a route on which the vehicle travels; and
an image display unit (4) configured to display the route surrounding image.

2. The driving assistance device according to claim 1, wherein
the image storage unit is configured to
convert the captured image captured by the imaging device into an overhead image viewed vertically downward from a virtual viewpoint located in an upper airspace, and
extract and store an image of a U-shaped region surrounding the vehicle from three sides including a traveling direction and left and right sides of the vehicle in the overhead image.

3. The driving assistance device according to claim 1 or 2, wherein
the image display unit is configured to sequentially switch the route surrounding image to be displayed as the vehicle moves, and display the route surrounding image together with a vehicle image (51) showing a current position of the vehicle.

4. The driving assistance device according to claim 1 or 2, wherein
the image display unit displays the route surrounding image on one screen.
